# EUROPEAN PATENT APPLICATION

(11) **EP 4 844 238 A1**
(43) Date of publication of application: **25.11.2026**
(21) Application number: 25177233.1
(22) Date of filing: 19.05.2025
(51) Int. Cl.: F16B 37/04, F16B 7/18

(54) **CONNECTION SYSTEM**

(71) Applicant: Hilti Aktiengesellschaft, 9494 Schaan (LI)
(72) Inventor: Thon, Raphael, 6800 Feldkirch (AT)
(74) Representative: Hilti Aktiengesellschaft Corporate Intellectual Property

(57) **Abstract**

A connection system includes a strut channel (80) and a channel nut (10). The strut channel has a first channel lip (81) and a second channel lip (82). These channel lips flank a slot (83) that allows access to the inside of the strut channel from the outside. Both channel lips project into the inside of the strut channel and have a constant wall thickness. The channel lips are arranged in a non-parallel manner and the distance between them decreases as they extend deeper into the strut channel. The channel nut has at least one first flange (11). The first flange has a first notch (21) and a second notch (22) to receive the first and second channel lips, respectively. The first notch provides line contact with the first channel lip when both channel lips are received within their respective notches.

## Description

The invention relates to a connection system comprising a strut channel and a channel nut.

EP 4 382 754 A1 and EP 4 542 065 A1 describe channel nuts for strut channels.

EP1693525 A2 describes a channel with inturned channel lips and a corresponding T-bolt.

EP4382754A1 and EP4542065A1 describe channel nuts comprising two first flanges, each of the flanges comprising a first notch for receiving a first channel lip and a second notch for receiving a second channel lip of a strut channel.

EP3643846 A1 and EP3643847 A1 disclose channels provided with triangularly thickened channel lips for engagement of corresponding channel nuts, and EP2313216 A1 discloses a method for manufacturing a channel with thickened channel lips. US8251326B discloses extruded aluminium channels.

DE202016008765U1 describes C-shaped channels made from thin sheet metal and provided with angled channel lips. DE202016008765U1 proposes to use the angled channel lips as a clip-in feature for a grid of perpendicular strut channels.

WO2020095216A1 describes elongate structural elements with inturned channel lips.

A connection system according to the invention comprises a strut channel and a channel nut,
- wherein the strut channel comprises a first channel lip and a second channel lip, wherein the first channel lip and the second channel lip flank a slot that provides access to the inside of the strut channel from the outside of the strut channel, wherein the first channel lip and the second channel lip both project into the inside of the strut channel, and wherein each of the first channel lip and the second channel lip has generally constant wall thickness,
- wherein the first channel lip and the second channel lip are arranged in non-parallel manner, such that the distance between them decreases as they extend deeper into the strut channel,
- wherein the channel nut comprises at least one first flange, the first flange comprising a first notch for receiving the first channel lip and a second notch for receiving the second channel lip. The system is characterized in that
- the first notch is configured to provide line contact between the first flange and the first channel lip when the first channel lip is received within the first notch and when the second channel lip is received within the second notch.

Accordingly, the channel lips are provided at a defined angle, which corresponds to the angle provided on at least one of the notches, so that when the channel nut is pressed against the channel lips from inside of the strut channel, the interface can be described as a line contact.

The proposed arrangement targets at reducing the deformation, in particular the widening, of the strut channel under pretension of the channel nut, while maintaining the required shear load. This, in term, can allow to reduce the material thickness of the strut channel, to thus save material.

The teaching of claim 2 provides line contact at both opposite channel lips, thereby further increasing performance, enabling to further save material.

The teaching of claim 3 provides an axial, with respect to the longitudinal axis of the strut channel, offset of the contact lines, which can further improve performance.

The teaching of claim 4 can provide particularly good load balance and thus performance.

The invention is explained in greater detail below with reference to preferred exemplary embodiments, which are depicted schematically in the accompanying drawings. Individual features of the exemplary embodiments presented below can be implemented either individually or in any combination within the scope of the present invention.
Figure 1 is a perspective view of a strut channel.
Figure 2 is a cross-sectional view of the strut channel of figure 1.
Figure 3 is a cross-sectional view, alike that of figure 2, of a connection system comprising the strut channel of figures 1 and 2, and a channel nut.

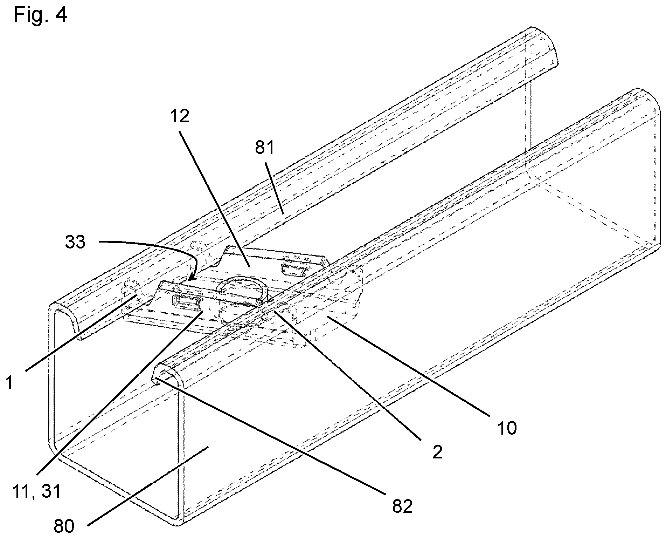

Figure 4 is a transparent perspective view of the connection system of figure 3.

The system comprises an elongate strut channel 80, consisting of steel, and a channel nut 10, also consisting of steel.

The strut channel 80 comprises a mouth, where the strut channel 80 comprises a first channel lip 81 and a second channel lip 82. Each of these channel lips 81 and 82 is inturned into the strut channel 80, and each of these channel lips 81 and 82 has generally constant wall thickness, wherein the wall thickness of both channel lips 81 and 82 is generally the same. In the present embodiment, the strut channel 80 has generally constant wall thickness throughout, but this is exemplary only.

The channel lips 81 and 82 flank a slot 83 providing access to the inside of the strut channel 80 from the outside. Both channel lips 81 and 82 extend along the longitudinal direction of the strut channel 80. Both channel lips 81 and 82 project into the inside of the strut channel 80.

The first channel lip 81 and the second channel lip 82 are arranged in a non-parallel manner, and their distance decreases the deeper they reach into the strut channel 80. Accordingly, the channel lips 81 and 82 and converge towards each other the deeper they reach into the strut channel 80 and the width of the slot 83 decreases the deeper the channel lips 81 and 82 reach into the strut channel 80.

The strut channel 80 can for example be a C-shaped strut channel, as shown, or also a V-shaped or differently shaped strut channel. The strut channel 80 has a generally mirror-symmetrical cross-section, with a plane of symmetry extending through the slot 83.

The channel nut 10 comprises a first flange 11, which includes a first notch 21 for receiving the first channel lip 81 and a second notch 22 for receiving the second channel lip 82. Both the first notch 21 and the second notch 22 are V-shaped notches. The first flange 11 has a front face 31 and a rear face 33, with both the first notch 21 and the second notch 22 extending from the front face 31 to the rear face 33. In the present embodiment, the channel nut also comprises a second flange 12, which is shaped in analogy to the first flange 11, and which interacts with the strut channel 80 in analogy to the first flange 11.

The interaction between the strut channel 80 and the channel nut 10 is characterized by the first notch 21 providing line contact, namely at line 1, between the first flange 11 and the first channel lip 81 when the first channel lip 81 is received within the first notch 21 and when the second channel lip 82 is received within the second notch 22.

The second notch 22 is configured to provide line contact, namely at line 2, between the first flange 11 and the second channel lip 82 when the first channel lip 81 is received within the first notch 21 and the second channel lip 82 is received within the second notch 22.

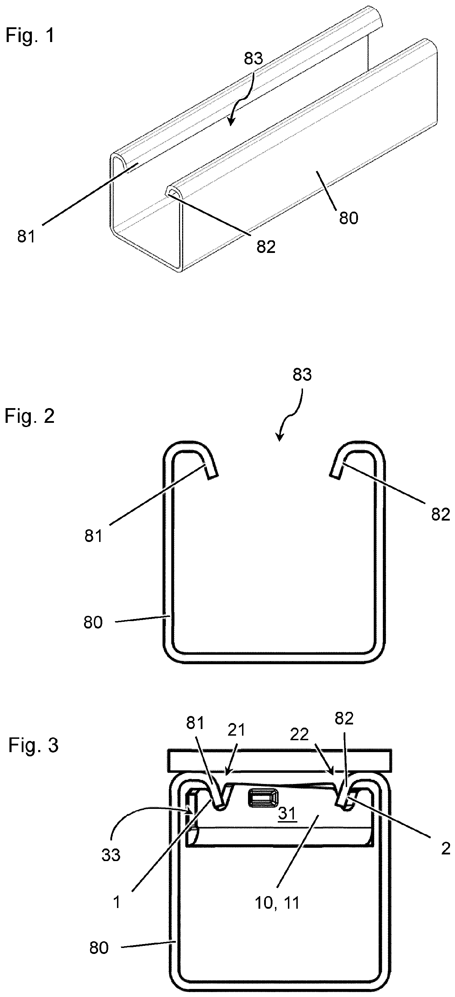

The line contact between the first flange 11 and the first channel lip 81 provided at the first notch 21 is at the front face 31 and the line contact between the first flange 11 and the second channel lip 82 provided at the second notch 22 is at the rear face 33. Accordingly, in figure 3, the line contact provided at the first notch 21 is closer to the drawing plane than is the line contact provided at the second notch 22. The offset of the line contacts is achieved by arranging the notches 21 and 22 at an angle, in particular with respect to longitudinal axis of the strut channel 80.

The following section provides additional considerations, which are optional only and not intended to delimit the claims in any way.

Modern connection systems often involve a strut channel and a channel nut. Unique to this invention, the strut channel has inturned channel lips that flank a slot providing access to the inside of the strut channel. Rather than being parallel, these channel lips converge towards the inside of the strut channel. In this system, the channel nut has a first flange with notches that receive the channel lips, providing line contact at specific locations. Essentially, this arrangement aims to reduce deformation and material thickness while maintaining the required shear load. Line contact is achieved at both opposite channel lips. Exemplary embodiments are depicted in the accompanying drawings. In the figures, the strut channel can be seen in perspective and cross-sectional views. Likewise, the connection system comprising the strut channel and the channel nut is shown in detail. Each feature of the invention is designed to optimize performance and material usage. Explained in greater detail, the invention provides a robust and efficient connection system. Notably, the claims section outlines the specific features of the connection system, including the arrangement of the channel lips and the configuration of the notches in the channel nut.

## Claims

1. Connection system comprising a strut channel (80) and a channel nut (10),
- wherein the strut channel comprises a first channel lip (81) and a second channel lip (82), wherein the first channel lip (81) and the second channel lip (82) flank a slot (83) that provides access to the inside of the strut channel (80) from the outside of the strut channel (80), wherein the first channel lip (81) and the second channel lip (82) both project into the inside of the strut channel (80), and wherein each of the first channel lip (81) and the second channel lip (82) has generally constant wall thickness,
- wherein the first channel lip (81) and the second channel lip (82) are arranged in non-parallel manner, such that the distance between them decreases as they extend deeper into the strut channel (80),
- wherein the channel nut (10) comprises at least one first flange (11), the first flange comprising a first notch (21) for receiving the first channel lip (81) and a second notch (22) for receiving the second channel lip (82),
**characterized in that**
- the first notch (21) is configured to provide line contact between the first flange (11) and the first channel lip (81) when the first channel lip (81) is received within the first notch (21) and when the second channel lip (82) is received within the second notch (22).

2. System according to claim 1,
**characterized in that**
the second notch (22) is configured to provide line contact between the first flange (11) and the second channel lip (82) when the first channel lip (81) is received within the first notch (21) and when the second channel lip (82) is received within the second notch (22).

3. System according to claim 2,
**characterized in that**
the first flange (11) has a front face (31) and a rear face (33), wherein the first notch (21) and the second notch (22) both extend from the front face (31) to the rear face (33), wherein the line contact between the first flange (11) and the first channel lip (81) that is provided at the first notch (21) is at the front face (31) and the line contact between the first flange (11) and the second channel lip (82) that is provided at the second notch (22) is at the rear face (33).

4. System according to any of the preceding claims,
**characterized in that**
the strut channel (80) has generally mirror-symmetrical cross-section, with a plane of symmetry extending through the slot (83).
